# EUROPEAN PATENT APPLICATION

(11) **EP 4 811 452 A1**
(43) Date of publication of application: **23.09.2026**
(21) Application number: 24891378.2
(22) Date of filing: 11.11.2024
(51) Int. Cl.: H01M 4/505, H01M 4/525

(54) **POSITIVE ELECTRODE ACTIVE MATERIAL FOR SECONDARY BATTERY, AND SECONDARY BATTERY**

(30) Priority: 14.11.2023 JP 2023193919
(71) Applicant: Panasonic Intellectual Property Management Co., Ltd., Kadoma-shi, Osaka 571-0057 (JP)
(72) Inventor: OTO, Takashi, Kadoma-shi, Osaka 571-0057 (JP)
(74) Representative: Novagraaf International SA
(86) International application number: PCT/JP2024/039978
(87) International publication number: WO 2025/105342

(57) **Abstract**

A positive electrode active material for a secondary battery includes a lithium metal composite oxide having a rock-salt type crystal structure attributable to the space group Fm-3m. The lithium metal composite oxide contains at least Li and Mn. The lattice constant a indicating the length of the crystal lattice of the lithium metal composite oxide in the a-axis direction is 4.050 Å or more and 4.165 Å or less. The specific surface area of the lithium metal composite oxide is 0.1 m²/g or more and 35 m²/g or less.

## Description

### [Cross Reference to Related Application]

The present application is based on and claims priority under 35 U.S.C. §119 to Japanese Patent Application No. 2023-193919, filed on November 14, 2023, of which entire content is incorporated herein by reference into the present application.

### [Technical Field]

The present disclosure relates to a positive electrode active material for a secondary battery and a secondary battery.

### [Background Art]

Secondary batteries, especially lithium-ion secondary batteries, are expected to be promising power sources for small consumer applications, power storage devices, and electric vehicles due to their high output and high energy density. As a positive electrode active material for lithium-ion secondary batteries, a composite oxide of lithium and a transition metal (e.g., cobalt) is used. Replacement of part of cobalt with nickel can achieve a higher capacity.

In recent years, however, in response to demands for high energy density, Li-excess lithium metal composite oxides based on Li₁₊ₓMn₁₋ₓO₂ with a rock-salt structure have attracted attention.

Patent Literature 1 discloses an active material for nonaqueous electrolyte energy storage element containing a lithium transition metal composite oxide having a crystal structure attributable to the space group Fm-3m and represented by compositional formula (1) of Li₁₊ₓNb_{y}Me_{z}AₚO₂ (where Me is a transition metal containing either or both Fe and Mn, 0 < x < 1, 0 < y < 0.5, 0.25 ≤ z < 1, A is an element other than Nb and Me, and 0 ≤ p ≤ 0.2).

### [Citation List]

### [Patent Literature]

Patent Literature 1: International Publication No. 2014/156153 pamphlet

### [Summary of Invention]

### [Technical Problem]

In Patent Literature 1, high capacity is made possible by controlling the composition (i.e., addition of Nb). However, the effect of improving the capacity is insufficient, and there is still room for improvement.

### [Solution to Problem]

In view of the foregoing, one aspect of the present disclosure relates to a positive electrode active material for a secondary battery, including a lithium metal composite oxide having a rock-salt type crystal structure attributable to space group Fm-3m, wherein the lithium metal composite oxide contains at least Li and Mn, a lattice constant a indicating a length of a crystal lattice of the lithium metal composite oxide in an a-axis direction is 4.050 Å or more and 4.165 Å or less, and a specific surface area of the lithium metal composite oxide is 0.1 m²/g or more and 35 m²/g or less.

Another aspect of the present disclosure relates to a secondary battery including a positive electrode; a negative electrode; an electrolyte; and a separator provided between the positive electrode and the negative electrode, wherein the positive electrode contains the aforementioned positive electrode active material for a secondary battery.

### [Advantageous Effects of Invention]

According to the present disclosure, a secondary battery with high energy density can be achieved.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic partially cut-away perspective view of a secondary battery according to an embodiment of the present disclosure.
[FIG. 2] FIG. 2 is a diagram showing the relationship between the specific surface area and the discharge capacity of a lithium metal composite oxide (Fm).
[FIG. 3] FIG. 3 is a diagram showing the relationship between the lattice constant a and the discharge capacity of the lithium metal composite oxide (Fm).

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

In the following description, the word "comprise" (or "include") is an expression including meanings of "comprise (or include)", "essentially consist of", and "consist of".

Secondary batteries include at least nonaqueous electrolyte secondary batteries such as lithium-ion secondary batteries and lithium-metal secondary batteries, and all-solid-state batteries using a solid electrolyte.

A positive electrode active material for a secondary battery according to an embodiment of the present disclosure includes a lithium metal composite oxide having a rock-salt type crystal structure attributable to the space group Fm-3m (hereinafter also referred to as "the lithium metal composite oxide (Fm)"). The lithium metal composite oxide (Fm) has a crystal structure based on a rock-salt structure belonging to the space group Fm-3m, and has a crystal structure similar to, for example, the rock-salt structure represented by NaCl. Oxygen atoms can occupy anion sites of such a crystal structure, and Li atoms and metal atoms other than Li can irregularly occupy cation sites thereof.

The lithium metal composite oxide (Fm) contains at least Li and Mn. A lithium metal composite oxide (Fm) having a rock-salt structure based on Li₁₊ₓMn₁₋ₓO₂ is expected to exhibit a high capacity.

In mass-production of the lithium metal composite oxide (Fm), efficient synthesis by a solid-phase method in which a raw material mixture is sintered is required. However, particles of the lithium metal composite oxide (Fm) synthesized by sintering are often large and agglomerated particles with high hardness. Particles obtained by crushing such agglomerated particles with high hardness often cannot exhibit sufficient discharge capacity.

### (Specific Surface Area)

Meanwhile, detailed analysis of the relationship between the specific surface area and the capacity of the lithium metal composite oxide (Fm) revealed that the specific surface area strongly affects capacity expression. The capacity exhibited by the lithium metal composite oxide (Fm) significantly varies depending on its specific surface area. Specifically, a positive electrode active material having a higher capacity can be obtained by controlling the specific surface area of the lithium metal composite oxide (Fm) to 0.1 m²/g or more and 35 m²/g or less. When the specific surface area is within the above range, the reaction area of the lithium metal composite oxide (Fm) is sufficiently large and the capacity exhibited by the lithium metal composite oxide (Fm) per unit mass is significantly large. As a result of the specific surface area being not excessively large, the filling rate of the lithium metal composite oxide (Fm) in the positive electrode active material layer can be increased. Furthermore, as a result of the specific surface area being not excessively large, side reactions can be easily suppressed.

Moreover, compared to conventionally used positive electrode active materials, the lithium metal composite oxide (Fm) shows a significant improvement in capacity when the specific surface area is controlled. The reason for this is not clear, but it is presumed that the fact that stress hardly occurs inside particles having a rock-salt type crystal structure belonging to the space group Fm-3m and that the surface state of the particles is relatively smooth are complexly interrelated.

The specific surface area of the lithium metal composite oxide (Fm) may be 0.1 m²/g or more and 35 m²/g or less, and may also be 0.13 m²/g or more and 31.2 m²/g or less, 3.8 m²/g or more and 31.2 m²/g or less, 3.8 m²/g or more and 20 m²/g or less, or 8.0 m²/g or more and 11 m²/g (or 10 m²/g) or less.

The specific surface area may be measured using the lithium metal composite oxide (Fm) as a raw material powder before being formed into a positive electrode, or may be measured using the lithium metal composite oxide (Fm) separated from the positive electrode. Both methods yield substantially the same measurement results.

Here, the specific surface area of the lithium metal composite oxide (Fm) is measured after collecting 0.20 g to 0.25 g of a sample of the lithium metal composite oxide (Fm), accommodating the sample in a measurement cell composed of a glass tube for specific surface area measurement, and performing drying and degassing in the measurement cell. Drying and degassing are carried out at a pressure of 6.67 Pa and a temperature of 250°C ± 5°C for 1 hour or more. Thereafter, the mass of the sample in the measurement cell is measured to the nearest 0.1 mg. Then, the nitrogen adsorption amount of the sample at a temperature of -196°C is measured using a specific surface area measuring device. As the measuring device, an automated specific surface area/pore distribution measuring device "TriStar II 3020" manufactured by Shimadzu Corporation may be used, for example. From the results of adsorption amount measurement, the specific surface area of the lithium metal composite oxide (Fm) is determined by the BET multipoint method within the range of partial pressure (relative pressure) of 0.001 to 0.2. Alternatively, when the specific surface area is small, the adsorption amount of krypton gas may be measured for the purpose of measuring the specific surface area with a high accuracy.

The lattice constant a indicating the length of the crystal lattice of the lithium metal composite oxide (Fm) in the a-axis direction may be 4.050 Å or more and 4.165 Å or less. When the crystal lattice has such a lattice constant a, the capacity improvement effect can become more prominent. Although the detailed reason for this is unknown, it is considered that when the lattice constant a is within the above range, the stability of the crystal structure is maintained even when the specific surface area is sufficiently large. It is considered that when the specific surface area is sufficiently increased while maintaining the stability of the lithium metal composite oxide (Fm) having a stable crystal structure, the utilization rate of the lithium metal composite oxide (Fm) is increased, the effective reaction area is significantly increased, the capacity is increased, and the capacity retention rate is also increased.

From the viewpoint of achieving a higher capacity, the lattice constant a of the lithium metal composite oxide (Fm) may be 4.050 Å or more and 4.165 Å or less, or may be 4.100 Å or more and 4.151 Å or less.

The crystal structure of the lithium metal composite oxide (Fm) is identified from an X-ray diffraction pattern measured using a powder X-ray diffractometer. As the powder X-ray diffractometer, a benchtop X-ray diffraction instrument "MiniFlex" manufactured by Rigaku Corporation can be used, for example. The lattice constant a of the lithium metal composite oxide (Fm) can be determined, for example, using the integrated powder X-ray analysis software "PDXL" manufactured by Rigaku Corporation. The X-ray source for X-ray diffraction measurement is CuKα radiation, and the measurement range of 2θ is 10° to 100°.

The lattice constant a determined using the integrated powder X-ray analysis software "PDXL" can be followed by a numerical value in parentheses. The numerical value in parentheses is a value indicating an error in the third decimal place. For example, in a case of 4.115(2) Å, the lattice constant a is 4.113 Å or more and 4.117 Å or less. In the present disclosure, the lattice constant a being 4.050 Å or more and 4.165 Å or less means that the lattice constant a is in the range of 4.050 Å or more and 4.165 Å or less within the above error range.

### (Converted Volume Particle Size Distribution)

When the relationship between the capacity and the volume-based particle size distribution (hereinafter also referred to as "converted volume particle size distribution") of primary particles of a lithium metal composite oxide derived from a cross-sectional image of a positive electrode active material layer was analyzed in detail, it was revealed that not only the specific surface area but also the particle size distribution affects capacity expression. In particular, the expressed capacity significantly varies depending on the difference (D90 - D50) between the particle diameter D90 at a cumulative volume of 90% and the particle diameter D50 at a cumulative volume of 50% in the converted volume particle size distribution. Specifically, by controlling the difference (D90 - D50) between the particle diameter D90 (hereinafter also simply referred to as "D90") and the particle diameter D50 (hereinafter also simply referred to as "D50") to less than 6.3 µm, a positive electrode active material having a higher capacity can be obtained.

In general, particles obtained by crushing agglomerated particles having a high hardness tend to have a large difference (D90 - D50) between D90 and D50. Particles having a particle diameter close to D50 or less than D50 are particles that readily accept charge and discharge and readily exhibit a capacity. By contrast, particles having a particle diameter close to D90 or exceeding D90 are particles that are relatively difficult to accept charge and discharge and difficult to exhibit a capacity. The smaller the difference (D90 - D50) between D90 and D50, the smaller the difference in ease of accepting charge and discharge between the former particles and the latter particles. In such a case, the charge-discharge reaction tends to proceed uniformly in the positive electrode active material layer, and polarization is unlikely to increase.

Furthermore, the capacity of the lithium metal composite oxide (Fm) is more susceptible to the difference (D90 - D50) between D90 and D50 than conventionally used positive electrode active materials. In other words, the lithium metal composite oxide (Fm) shows a significant improvement in capacity when the particle size distribution is controlled to be suitable for charge and discharge. Although the reason for this is not clear, it is presumed that the fact that particles having a rock-salt type crystal structure belonging to the space group Fm-3m have relatively low electronic conductivity, that strain is unlikely to occur inside the particles, that the surface state of the particles is relatively smooth, and the like are complexly interrelated.

The converted volume particle size distribution is a distribution obtained by converting the "area-based" distribution of the primary particles of the lithium metal composite oxide derived from a cross-sectional image (hereinafter also referred to as "cross-sectional SEM image") of a positive electrode active material layer into a "volume-based" distribution. Measurement of an area Sd of the cross section of a primary particle observed in the cross-sectional SEM image can determine a diameter Dd (Dd = 8√(Sd/π³)) of an equivalent sphere having the measured area Sd as the representative cross-sectional area and a volume (Vd) of the equivalent sphere having the diameter (Dd). Determination of the volumes of the equivalent spheres for all the primary particles observed in the cross-sectional SEM image can determine the volume-based cumulative particle size distribution, that is, the converted volume particle size distribution.

The following describes an example of the procedure for obtaining the converted volume particle size distribution from the cross-sectional SEM image.

### (1) Preparation of Cross Section of Positive Electrode

First, a positive electrode as a measurement target is prepared. The positive electrode includes a positive electrode current collector and a positive electrode active material layer provided on a surface of the positive electrode current collector. The positive electrode active material layer and the positive electrode current collector such as above are cut together in the thickness direction of the positive electrode to form a cross section. In doing so, a thermosetting resin may be filled in the positive electrode active material layer and cured. The cross-sectional sample of the positive electrode active material layer may be obtained, for example, by the cross section polisher (CP) method or the focused ion beam (FIB) method.

The positive electrode as a measurement target is taken out of a secondary battery having a depth of discharge (DOD) of 90% or more. The depth of discharge (DOD) is the ratio of the amount of electricity discharged to the amount of electricity that the battery in the fully charged state possesses. Note that the rated capacity corresponds to the amount of charge (i.e., full charge amount) when a battery is charged from a fully discharged state (DOD = 100%) to a fully charged state (SOC = 100%, DOD = 0%). The charge termination voltage corresponds to the voltage of a battery in a fully charged state. The discharge termination voltage corresponds to the voltage of a battery in a fully discharged state.

### (2) Capture of Cross-Sectional SEM Image

Next, the cross-sectional sample of the positive electrode (positive electrode active material layer) is observed using a SEM. Observation using a SEM is carried out, for example, at a magnification of 500 times to 3000 times. The cross-sectional SEM image is captured so that a region having a length of 30 µm or more (desirably 40 µm or more) in the in-plane direction (direction along the surface of the positive electrode current collector) of the positive electrode active material layer is observed.

### (3) Image Analysis

For each cross section of 100 or more arbitrarily selected primary particles of the lithium metal composite oxide (Fm) in the cross-sectional SEM image, the area Sd of the cross section is measured, and the equivalent sphere diameter Dd (Dd = 8√(Sd/π³)) and the volume (Vd) are calculated. The volume-based cumulative particle size distribution of the obtained volumes (Vd) of the 100 or more equivalent spheres is determined as a converted volume particle size distribution.

The 100 or more primary particles may be selected, to the extent possible, from a region that is a central region of the positive electrode active material layer in the thickness direction and is spaced apart from the edges of the positive electrode active material layer in the in-plane direction. Even among the particles of the lithium metal composite oxide (Fm), secondary particles formed by agglomeration of primary particles and particles that cannot be definitely distinguished as primary particles or secondary particles are excluded in calculation of the converted volume particle size distribution. When the cross-sectional SEM image is visually observed, the secondary particles can be easily identified and excluded according to their particle shape.

Image analysis software (e.g., ImageJ) can be used for image analysis. In image analysis, the cross-sectional SEM image may be binarized to assign black (or white) to the primary particles of the lithium metal composite oxide (Fm) and assign white (or black) to the rest.

### (Particle Diameter D50 at Cumulative Volume of 50%)

D50 of the primary particles of the lithium metal composite oxide (Fm) is the diameter Dd when the cumulative volume reaches 50% of the total volume in volume accumulation starting from particles with smaller equivalent sphere diameter Dd in the converted volume particle size distribution. D50 may be selected according to the electrode design. D50 is, for example, 0.05 µm or more, and may be 0.10 µm or more, 0.20 µm or more, or 0.25 µm or more. D50 is, for example, 8 µm or less, and may be 2 µm or less, 1 µm or less, or 0.8 µm or less.

### (Particle Diameter D90 at Cumulative Volume of 90%)

Similarly, D90 is the equivalent sphere diameter when the cumulative volume reaches 90% of the total volume in volume accumulation starting from particles with smaller equivalent sphere diameter Dd. D90 is, for example, greater than 0.46 µm, and may be 0.47 µm or more, or 0.5 µm or more. D90 is, for example, 11 µm or less, and may be 5 µm or less, 2 µm or less, or 1 µm or less. A lithium metal composite oxide (Fm) having such D90 can be obtained by pulverizing, under appropriate conditions, a lithium metal composite oxide (Fm) with a high hardness obtained by sintering the raw material mixture.

### (Difference (D90 - D50) between D90 and D50)

The difference (D90 - D50) between D90 and D50 may be 6.3 µm or less, but the smaller, the more desirable. The difference (D90 - D50) between D90 and D50 may be 4.2 µm or less, 3.0 µm or less, 1.5 µm or less, or 1.0 µm or less. The lower limit of the difference (D90 - D50) between D90 and D50 is not particularly limited, and may be, for example, 0.1 µm or more.

The lithium metal composite oxide (Fm) can further contain a positive element M different from Li and Mn. The positive element M may be any positive element other than hydrogen. The positive element M may be a metal element (including so-called metalloid elements). That is, the lithium metal composite oxide (Fm) can be a lithium transition metal composite oxide containing at least three types of metals.

When the lithium metal composite oxide (Fm) contains the element M, the main component among metal elements other than Li is preferably Mn. The number b of atoms of Mn in the lithium metal composite oxide (Fm) may be the largest among the numbers of atoms of the metal elements other than Li in the lithium metal composite oxide (Fm). The number of atoms of Mn may be equal to or greater than the total number c of atoms of metal element(s) (i.e., the positive element M) except Li and Mn. The ratio (b/c) of the number b of atoms of Mn to the number c of atoms of the positive element M in the lithium metal composite oxide is, for example, 1 or more and 15 or less, and may be 1 or more and 12 or less, greater than 1 and 12 or less, 2 or more and 12 or less, 3 or more and 12 or less, 4 or more and 12 or less, 5 or more and 12 or less, 6 or more and 12 or less, or 7 or more and 12 or less.

The positive element M may include at least one selected from the group consisting of, for example, Fe, Ge, Si, Ga, Ni, Co, Sn, Cu, Nb, Mo, Bi, V, Cr, Y, Ti, Zr, Zn, Na, K, Ca, Mg, Pt, Au, Ag, Ru, Ta, W, La, Ce, Pr, Gd, Sm, Eu, Yb, Dy, and Er. The lithium metal composite oxide (Fm) may contain any two or more elements selected from the above group as the positive element M.

Desirably, the lithium metal composite oxide (Fm) contains at least Ti as the positive element M. A lithium metal composite oxide (Fm) containing Ti as the positive element M can exhibit a particularly high capacity. One reason for this is thought to be that Ti can exist in the form of Ti⁴⁺ with empty d orbitals in the lithium metal composite oxide (Fm). If so, it is considered that a rock-salt type crystal structure having high symmetry, higher stability, and high capacity is formed. Furthermore, such a rock-salt structure is considered to be less likely to become unstable even after repetition of charge and discharge cycles.

When the lithium metal composite oxide (Fm) contains Ti, the ratio (Mn/Ti) of the number of atoms of Mn to the number of atoms of Ti in the lithium metal composite oxide (Fm) may be 1 or more, 2 or more, 3 or more, 4 or more, 5 or more, 6 or more, or 7 or more. By contrast, the ratio Mn/Ti may be 70 or less, 30 or less, 15 or less, or 12 or less. The proportion of Ti in the positive element M may be 25 at% or more, 50 at% or more, 80 at% or more, or 100 at%.

The lithium metal composite oxide (Fm) may be an oxyfluoride containing F. Fluorine can substitute for oxygen atoms at anion sites in the above crystal structure. This stabilizes the crystal structure even when the lithium metal composite oxide (Fm) is in an Li-excess state, resulting in achievement of a higher capacity. In addition, substitution of fluorine atoms increases the average discharge potential. Note that the Li-excess state refers to a state in which the number of atoms of Li is greater than the total number of atoms of the metal element(s) other than Li in the lithium metal composite oxide (Fm).

In an Li-excess lithium metal composite oxide (Fm), the arrangement of Li at cation sites is irregular, and Li is present in various bonding states. Therefore, the distribution of voltage associated with Li release has a wide range. For this reason, the low potential side (tail portion) of the voltage distribution can become difficult to be utilized as capacity. However, introduction of fluorine atoms shifts the distribution of voltage associated with Li release toward the high potential side. As a result, it becomes easy to utilize the tail portion as capacity. This further increases the available capacity.

The lithium metal composite oxide (Fm) can be represented by the compositional formula of LiₐMn_{b}M_{c}O_{d}Fₑ. Here, 1 ≤ a < 1.4, 0.5 ≤ b < 0.9, 0 ≤ c ≤ 0.4, 1.33 ≤ d ≤ 2, 0 ≤ e ≤ 0.67, and 1.7 ≤ d + e ≤ 2.2 are satisfied.

When the lithium metal composite oxide (Fm) contains the positive element M, the range of c is 0 < c ≤ 0.4, and may be 0 < c ≤ 0.3 or 0 < c ≤ 0.2. Also, the lower limit of c may be, for example, 0.01 ≤ c or 0.02 ≤ c.

The contents of the constituent elements of the lithium metal composite oxide (Fm) can be measured using an inductively coupled plasma atomic emission spectroscope (ICP-AES), an electron probe microanalyzer (EPMA), or an energy-dispersive X-ray analyzer (EDX), for example.

### <Production Method of Lithium Metal Composite Oxide (Fm)>

Although no limitation is placed on a production method of the lithium metal composite oxide (Fm), it is desirable to produce it by sintering a raw material mixture containing the constituent elements of the lithium metal composite oxide (Fm). Sintering promotes the growth of crystals with a structure similar to the rock-salt structure belonging to the space group Fm-3m. As a result, a lithium metal composite oxide (Fm) having a large crystallite size can be obtained. Thereafter, the specific surface area, converted volume particle size distribution, and the like may be controlled to desired ones by pulverization under predetermined conditions.

As raw materials of the constituent elements of the lithium metal composite oxide (Fm), an Mn compound, a compound of the element M, a lithium compound, a fluorine compound, a titanium compound, and the like may be selected arbitrarily and used. The types and mixing ratios of the raw materials may be selected as appropriate according to the desired composition described above.

Examples of the Mn compound include Mn oxides such as MnO₂ and Mn₂O₃, and manganese salts such as lithium manganate.

Examples of the compound of the positive element M include M salts such as oxides, oxyfluorides, and hydroxides.

Examples of the lithium compound include lithium oxides such as Li₂O, and lithium salts such as LiOH and lithium manganese oxide (LiMnO₂).

Examples of the fluorine compound include fluorine salts such as lithium fluoride (LiF).

Examples of the titanium compound include titanium oxides such as TiO₂ and titanium salts such as lithium titanate.

The sintering atmosphere for the raw material mixture can differ depending on the composition of a desired lithium metal composite oxide (Fm) and the types of the raw materials. The sintering atmosphere may be, for example, an oxidizing atmosphere (e.g., in air or in the presence of oxygen). It is desirable to circulate an atmospheric gas.

The sintering temperature for the raw material mixture can differ depending on the composition of a desired lithium metal composite oxide (Fm) and the types of the raw materials. The sintering temperature may be, for example, 700°C or higher, or 900°C or higher. The sintering temperature is desirably 1300°C or lower.

The lithium metal composite oxide (Fm) obtained by sintering is usually in the form of agglomerated particles. If so, the agglomerated particles may be pulverized. The pulverization conditions are selected so as to achieve, for example, a desired specific surface area or converted volume particle size distribution. As a pulverization apparatus, a stirring apparatus capable of applying a large shear force to the agglomerated particles, such as a ball mill or a bead mill, may be used.

Various methods may be used to control, for example, the specific surface area and the converted volume particle size distribution, and the method is not limited to control by agglomerated particle crushing. For example, the raw material mixture may be sintered while being stirred. For example, the raw material mixture may be sintered while being stirred under various conditions using a sintering furnace equipped with a fluidized bed. When doing so, the particle shape tends to become close to spherical, and the width of the particle size distribution tends to become narrow, resulting in a sharp distribution. Also, specific surface area control becomes easier.

Next, a secondary battery according to an embodiment of the present disclosure is described in detail. The secondary battery includes, for example, a positive electrode, a negative electrode, an electrolyte, and a separator described below.

### [Positive Electrode]

The positive electrode includes a positive electrode current collector and a positive electrode active material layer provided on a surface of the positive electrode current collector. The positive electrode active material layer can be formed, for example, by applying a positive electrode slurry, in which a positive electrode mixture containing a positive electrode active material, a binder, and the like is dispersed in a dispersion medium, to the surface of the positive electrode current collector, followed by drying. That is, the positive electrode active material layer may be a positive electrode mixture layer. The resulting applied film after drying may be rolled, if necessary. The positive electrode active material layer may be formed on one of the surfaces of the positive electrode current collector, or on both surfaces thereof.

The positive electrode active material layer contains a positive electrode active material as an essential component, and may contain a binder, a thickener, a conductive agent, a positive electrode additive, and the like as optional components. As the binder, thickener, and conductive agent, known materials can be used.

The positive electrode active material includes a lithium metal composite oxide having a rock salt type crystal structure attributable to the space group Fm-3m (the above-described lithium metal composite oxide (Fm)).

The lithium metal composite oxide (Fm) may be mixed with another known lithium metal oxide to be used as the positive electrode active material. Examples of the other known lithium metal oxide include lithium transition metal composite oxides such as LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is, for example, at least one element selected from the group consisting of Na, Mg, Sc, Y, Mn, Fe, Co, Ni, Cu, Zn, Al, Cr, Pb, Sb, and B. Me includes at least a transition element. Me includes, for example, at least one selected from the group consisting of Mn, Fe, Co, and Ni. Here, 0 ≤ a ≤ 1.2, 0 ≤ b ≤ 0.9, and 2.0 ≤ c ≤ 2.3. Note that the value "a" indicating the molar ratio of lithium is increased or decreased by charging and discharging.

As the positive electrode current collector, a non-porous conductive substrate (e.g., a metal foil) or a porous conductive substrate (e.g., a mesh, a net, or a punched sheet) is used. Examples of the material of the positive electrode current collector include stainless steel, aluminum, aluminum alloys, and titanium.

### [Negative Electrode]

The negative electrode includes, for example, a negative electrode current collector, and may include a negative electrode active material layer formed on a surface of the negative electrode current collector. The negative electrode active material layer can be formed, for example, by applying a negative electrode slurry, in which a negative electrode mixture containing a negative electrode active material, a binder, and the like is dispersed in a dispersion medium, to the surface of the negative electrode current collector, followed by drying. The resulting applied film after drying may be rolled, if necessary. That is, the negative electrode active material layer may be a negative electrode mixture layer. Alternatively, a lithium metal foil or a lithium alloy foil may be attached to the negative electrode current collector. The negative electrode active material layer may be formed on one of the surfaces of the negative electrode current collector, or on both surfaces thereof.

The negative electrode active material layer contains a negative electrode active material as an essential component, and may contain a binder, a conductive agent, a thickener, and the like as optional components. As the binder, conductive agent, and thickener, known materials can be used.

Examples of the negative electrode active material include a material that electrochemically absorbs and releases lithium ions, lithium metal, and lithium alloys. As the material that electrochemically absorbs and releases lithium ions, a carbon material or an alloy-based material is used, for example. Examples of the carbon material include graphite, graphitizable carbon (soft carbon), and non-graphitizable carbon (hard carbon). Among these, graphite, which is excellent in stability during charging and discharging and has a small irreversible capacity, is preferable. Examples of the alloy-based material include those containing at least one type of metal capable of forming an alloy with lithium. For example, a composite material of a lithium ion conductive phase and silicon phases dispersed in the lithium ion conductive phase may be used.

Examples of the negative electrode current collector include a non-porous conductive substrate (e.g., a metal foil), and a porous conductive substrate (e.g., a mesh, a net, or punched sheet). Examples of the material of the negative electrode current collector include stainless steel, nickel, nickel alloys, copper, and copper alloys.

### [Electrolyte]

The electrolyte may be a liquid electrolyte (electrolyte solution), a gel electrolyte, or a solid electrolyte. The liquid electrolyte (electrolyte solution) is a solution containing a nonaqueous solvent and a salt dissolved in the nonaqueous solvent, for example. The concentration of the salt in the electrolyte solution is 0.5 mol/L or more and 2 mol/L or less, for example. The electrolyte solution may contain a known additive. Various additives can be contained in the electrolyte.

The gel electrolyte contains a salt and a matrix polymer, or contains a salt, a nonaqueous solvent, and a matrix polymer. As the matrix polymer, a polymer material that absorbs a nonaqueous solvent to gel is used, for example. Examples of the polymer material include fluorocarbon resin, acrylic resin, polyether resin, and polyethylene oxide.

As the solid electrolyte, a material (e.g., an oxide-based solid electrolyte, a sulfide-based solid electrolyte, or a halide-based solid electrolyte) known in the field of all-solid-state lithium-ion secondary batteries and the like is used, for example.

The electrolyte solution is prepared by dissolving a salt in a nonaqueous solvent. The salt is an electrolyte salt that ionically dissociates in the nonaqueous solvent. The salt can include a lithium salt. The electrolyte solution is usually used in a liquid state, but may be in a state in which fluidity is restricted by a gelling agent or the like.

Examples of the nonaqueous solvent that can be used include cyclic carbonates, chain carbonates, cyclic carboxylic acid esters, and chain carboxylic acid esters. Examples of the cyclic carbonates include propylene carbonate (PC), ethylene carbonate (EC), and vinylene carbonate (VC). Examples of the chain carbonates include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include methyl acetate, ethyl acetate, propyl acetate, methyl propionate (MP), and ethyl propionate (EP). A nonaqueous solvent may be used alone, or two or more nonaqueous solvents may be used in combination.

Examples of the lithium salt that can be used include lithium salts of chlorine-containing acids (e.g., LiClO₄, LiAlCl₄, and LiB₁₀Cl₁₀), lithium salts of fluorine-containing acids (e.g., LiPF₆, LiPF₂O₂, LiBF₄, LiSbF₆, LiAsF₆, LiCF₃SO₃, and LiCF₃CO₂), lithium salts of fluorine-containing acid imides (e.g., LiN(FSO₂)₂, LiN(CF₃SO₂)₂, LiN(CF₃SO₂)(C₄F₉SO₂), and LiN(C₂F₅SO₂)₂), and lithium halides (e.g., LiCl, LiBr, and LiI). A lithium salt may be used alone, or two or more lithium salts may be used in combination.

The concentration of the lithium salt in the electrolyte solution may be 1 mol/liter or more and 2 mol/liter or less, or may be 1 mol/liter or more and 1.5 mol/liter or less. By controlling the lithium salt concentration to fall within any of the above-described ranges, an electrolyte solution having excellent ionic conductivity and moderate viscosity can be obtained. However, the lithium salt concentration is not limited to the above.

### [Separator]

The separator is provided between the positive electrode and the negative electrode. The separator is excellent in ion permeability and has moderate mechanical strength and insulating properties. As the separator, a microporous thin film, a woven fabric, or a nonwoven fabric can be used, for example. Preferable examples of the material of the separator include polyolefins such as polypropylene and polyethylene.

An example of the configuration of the secondary battery is a configuration in which an electrode group and the nonaqueous electrolyte are housed in a housing. The electrode group may be of a wound type in which the positive electrode and the negative electrode are wound with the separator therebetween, or of a stacked type in which the positive electrode and the negative electrode are stacked with the separator therebetween. Another type of the electrode group may be employed. In the present disclosure, no particular limitations are placed on the type, shape, and other features of the secondary battery. The secondary battery may be in any form, such as cylindrical, prismatic, coin-shaped, button-shaped, or laminate-type.

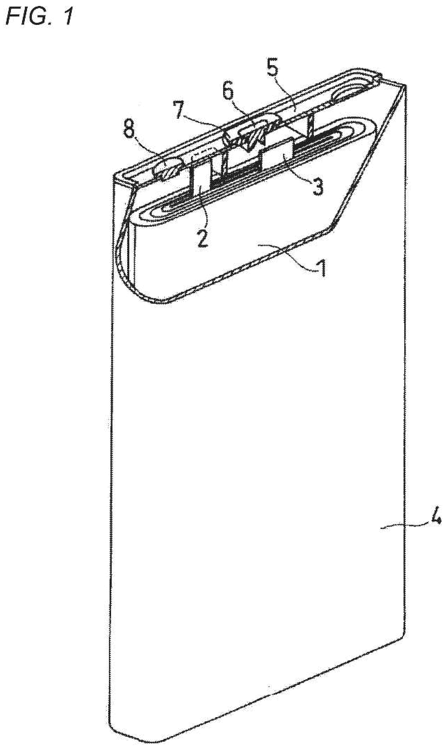

FIG. 1 is a schematic partially cut-away perspective view of a prismatic secondary battery according to an embodiment of the present disclosure.

The battery includes a bottomed prismatic battery case 4 and an electrode group 1 and a nonaqueous electrolyte (not illustrated) both housed in the battery case 4. The electrode group 1 includes an elongated band-shaped negative electrode, an elongated band-shaped positive electrode, and a separator provided therebetween. The negative electrode current collector of the negative electrode is electrically connected to a negative electrode terminal 6 provided on a sealing plate 5 via a negative electrode lead 3. The negative electrode terminal 6 is insulated from the sealing plate 5 by a resin-made gasket 7. The positive electrode current collector of the positive electrode is electrically connected to the back surface of the sealing plate 5 via a positive electrode lead 2. That is, the positive electrode is electrically connected to the battery case 4 serving also as a positive electrode terminal. The periphery of the sealing plate 5 is fitted to the opening end of the battery case 4, and the fitting portion is laser welded. The sealing plate 5 has an injection hole for the nonaqueous electrolyte, which is closed by a sealing plug 8 after liquid injection.

The housing may be, for example, of a cylindrical, coin-shaped, or button-shaped type including a metal-made battery case, or may be of a laminate type including a battery case of a laminate sheet that is a laminate of a barrier layer and a resin sheet.

### (Supplemental Note)

According to the above description of the embodiments, the following techniques are disclosed.

### (Technique 1)

A positive electrode active material for a secondary battery, including:
a lithium metal composite oxide having a rock-salt type crystal structure attributable to space group Fm-3m,
wherein the lithium metal composite oxide contains at least Li and Mn,
a lattice constant a indicating a length of a crystal lattice of the lithium metal composite oxide in an a-axis direction is 4.050 Å or more and 4.165 Å or less, and
a specific surface area of the lithium metal composite oxide is 0.1 m²/g or more and 35 m²/g or less.

### (Technique 2)

The positive electrode active material for a secondary battery according to Technique 1, wherein the specific surface area of the lithium metal composite oxide is 0.13 m²/g or more and 31.2 m²/g or less.

### (Technique 3)

The positive electrode active material for a secondary battery according to Technique 1 or 2, wherein the specific surface area of the lithium metal composite oxide is 3.8 m²/g or more and 31.2 m²/g or less.

### (Technique 4)

The positive electrode for a secondary battery according to any one of Techniques 1 to 3, wherein the lithium metal composite oxide further contains a positive element M different from Li and Mn, and
a ratio (b/c) of the number b of atoms of the Mn to the number c of atoms of the positive element M in the lithium metal composite oxide is 1 or more and 15 or less.

### (Technique 5)

The positive electrode for a secondary battery according to Technique 4, wherein the positive element M includes at least one selected from the group consisting of Fe, Ge, Si, Ga, Ni, Co, Sn, Cu, Nb, Mo, Bi, V, Cr, Y, Ti, Zr, Zn, Na, K, Ca, Mg, Pt, Au, Ag, Ru, Ta, W, La, Ce, Pr, Gd, Sm, Eu, Yb, Dy, and Er.

### (Technique 6)

The positive electrode for a secondary battery according to Technique 4 or 5, wherein the lithium metal composite oxide is represented by a compositional formula of LiₐMn_{b}M_{c}O_{d}Fₑ, and
1 ≤ a < 1.4, 0.5 ≤ b < 0.9, 0 < c ≤ 0.4, 1.33 ≤ d ≤ 2, 0 ≤ e ≤ 0.67, and 1.7 ≤ d + e ≤ 2.2 are satisfied.

### (Technique 7)

A secondary battery including:
a positive electrode; a negative electrode; an electrolyte; and a separator provided between the positive electrode and the negative electrode,
wherein the positive electrode contains the positive electrode active material for a secondary battery according to any one of Techniques 1 to 6.

Hereinafter, the present disclosure is specifically described based on examples and comparative examples. However, the present disclosure is not limited to the following examples.

### <Examples 1 to 6>

### [Positive Electrode Production]

A raw material mixture containing manganese oxide (Mn₂O₃), lithium carbonate (Li₂CO₃), and titanium oxide (TiO₂) was sintered at 950°C for 10 hours to obtain agglomerated particles of an Li-excess lithium metal composite oxide (Fm) having a composition of Li_{1.22}Mn_{0.61}Ti_{0.175}O_{d}. The composition was identified by analyzing the lithium metal composite oxide (Fm) by ICP emission spectrometry. The ratio (b/c) of the number b (= 0.61) of atoms of Mn to the number c (= 0.175) of atoms of Ti (positive element M) in the lithium metal composite oxide (Fm) was 3.49.

The obtained agglomerated particles of the lithium metal composite oxide (Fm) were pulverized under various conditions to obtain lithium metal composite oxides (Fm) having different specific surface areas.

In one example of the lithium metal composite oxides (Fm), the agglomerated particles of the lithium metal composite oxide (Fm) were charged into a planetary ball mill (Premium-Line P7 manufactured by Fritsch, rotational speed: 150 to 300 rpm, container: 45 mL, balls: ZrO₂ balls with φ3 mm), and treated in an air atmosphere at the room temperature for up to 12 hours.

The specific surface areas of the lithium metal composite oxides (Fm) measured by the method described above were in the range of 0.13 m²/g to 11 m²/g. D50 values were 0.2 µm to 0.5 µm, D90 values were 0.5 µm to 6.8 µm, and the differences (D90 - D50) between D90 and D50 were 0.3 µm to 6.3 µm. The results are shown in Table 1.

X-ray diffraction pattern measurement and analysis were carried out on each of the lithium metal composite oxides (Fm) after the pulverization. From the number and peak positions of XRD peaks, it was confirmed that each lithium metal composite oxide (Fm) had a rock-salt type crystal structure attributable to the space group Fm-3m. The lattice constant a of each lithium metal composite oxide (Fm) is shown in Table 1.

A positive electrode slurry was prepared by dispersing a positive electrode mixture obtained by mixing the obtained lithium metal composite oxide (Fm), acetylene black, and polyvinylidene fluoride in a mass ratio of 7:2:1 in N-methyl-2-pyrrolidone (NMP) being a dispersion medium. Next, the positive electrode slurry was applied to the surface of a positive electrode current collector made of an aluminum foil, and the resulting coating film was dried and then compressed to obtain a positive electrode plate. The positive electrode plate was cut to a predetermined electrode size to obtain a positive electrode. Thereafter, a cross-sectional SEM image of the positive electrode was captured by the method described above, and D50 and D90 in the converted volume particle size distribution were calculated from the cross-sectional SEM image.

### [Electrolyte Solution Preparation]

An electrolyte solution was prepared by adding LiPF₆ as a lithium salt to a mixed solvent obtained by mixing ethylene carbonate (EC), ethyl methyl carbonate (EMC), and dimethyl carbonate (DMC) in a predetermined volume ratio.

### [Test Cell Fabrication]

A test cell was fabricated with one of the above-described positive electrodes and a lithium metal foil as a negative electrode. An electrode group was formed by placing the positive electrode and the negative electrode to face each other with the separator therebetween, and housed in a coin-shaped battery case (battery can). After the electrolyte solution was injected into the battery can, the battery can was sealed with a sealing plate to obtain a coin-shaped test secondary battery.

### [Evaluation]

### (Discharge Capacity)

The secondary battery was subjected to constant-current charging at a constant current of 0.1 C in the ambient temperature environment until the battery voltage reached 4.95 V, and then further subjected to constant-voltage charging at a constant voltage of 4.95 V until the current reached 0.01 C. After a 20-minute pause thereafter, the battery was subjected to constant-current discharging at 0.1 C until the battery voltage reached 2.5 V, and the discharge capacity (mAh/g) was measured. Table 1 shows the relationship between the discharge capacity (mAh/g) per unit mass, the specific surface area, and the lattice constant a of each lithium metal composite oxide (Fm).

Batteries A1 to A6 are batteries of Examples 1 to 6, respectively.

**[Table 1]**

| Composition | Battery | Discharge capacity (mAh/g) | Specific surface area (m²/g) | Lattice constant a (Å) |
|---|---|---|---|---|
| | A1 | 87.0 | 0.13 | 4.141 |
| | A2 | 252.1 | 8.8 | 4.147 |
| Li1.22Mn0.61Ti0.175Od | A3 | 277.0 | 7.1 | 4.145 |
| | A4 | 245.9 | 10.0 | 4.149 |
| | A5 | 221.7 | 10.2 | 4.161 |
| | A6 | 210.8 | 11.0 | 4.066 |

It can be understood from Table 1 that the specific surface area significantly affects the capacity of the lithium metal composite oxide (Fm).

### <Examples 7 to 10>

### [Positive Electrode Production]

A raw material mixture containing manganese oxide (Mn₂O₃), lithium carbonate (Li₂CO₃), and titanium oxide (TiO₂) was sintered at 950°C for 10 hours to obtain agglomerated particles of an Li-excess lithium metal composite oxide (Fm) having a composition of Li_{1.20}Mn_{0.63}Ti_{0.175}O_{d}. The composition was identified by analyzing the lithium metal composite oxide (Fm) by ICP emission spectrometry. The ratio (b/c) of the number b (= 0.63) of atoms of Mn to the number c (= 0.175) of atoms of Ti (positive element M) in the lithium metal composite oxide (Fm) was 3.6.

The obtained agglomerated particles of the lithium metal composite oxide (Fm) were pulverized under various conditions to obtain lithium metal composite oxides (Fm) having different specific surface areas.

The specific surface areas of the lithium metal composite oxides (Fm) measured by the method described above were in the range of 3.8 m²/g to 31.2 m²/g. D50 values were 0.37 µm to 1.0 µm, D90 values were 0.55 µm to 1.8 µm. The differences (D90 - D50) between D90 and D50 were in the range of 0.18 µm to 0.8 µm.

X-ray diffraction pattern measurement and analysis were carried out on each of the lithium metal composite oxides (Fm) after the pulverization. From the number and peak positions of XRD peaks, it was confirmed that each lithium metal composite oxide (Fm) had a rock-salt type crystal structure attributable to the space group Fm-3m.

Positive electrodes were obtained in the same manner as in Examples 1 to 6, except that the obtained lithium metal composite oxides (Fm) were used. Thereafter, a cross-sectional SEM image of each positive electrode was captured by the method described above, and D50 and D90 in the converted volume particle size distribution were calculated from the cross-sectional SEM image and evaluated in the same manner. Table 2 shows the relationship between the discharge capacity (mAh/g) per unit mass, the specific surface area, and the lattice constant a of each lithium metal composite oxide (Fm).

Batteries A7 to A10 are batteries of Examples 7 to 10, respectively.

**[Table 2]**

| Composition | Battery | Discharge capacity (mAh/g) | Specific surface area (m²/g) | Lattice constant a (Å) |
|---|---|---|---|---|
| | A7 | 197.0 | 3.8 | 4.153 |
| Li1.20Mn0.63Ti0.175Od | A8 | 232.0 | 8.0 | 4.147 |
| | A9 | 200.6 | 17.0 | 4.115 |
| | A10 | 267.0 | 31.2 | 4.108 |

It can be understood from Table 2 that the specific surface area significantly affects the capacity of the lithium metal composite oxide (Fm) even when the composition of the lithium metal composite oxide (Fm) differs.

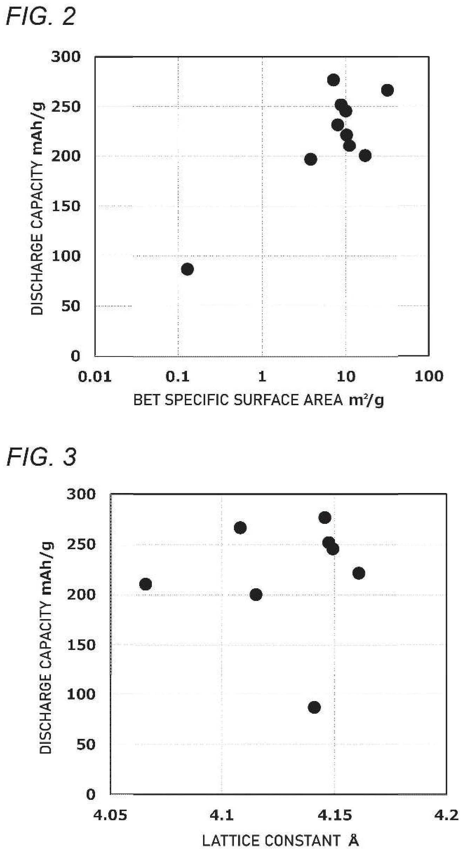

The relationship between the specific surface area and the discharge capacity in Tables 1 and 2 is shown in FIG. 2, and the relationship between the lattice constant a and the discharge capacity is shown in FIG. 3.

It is understood from FIG. 2 that the specific surface area is particularly preferably 3.8 m²/g or more. Also, it can be inferred that there is a capacity peak around a specific surface area of 10 m²/g in FIG. 2.

Although variation is observed in FIG. 3, it can be inferred that there is a capacity peak around 4.10 to 4.15 Å.

### [Industrial Applicability]

According to the positive electrode for a secondary battery of the present disclosure, a secondary battery having a high energy density can be provided. The secondary battery according to the present disclosure is useful as a main power source of, for example, mobile communication devices and portable electronic devices.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

1: Electrode group, 2: Positive electrode lead, 3: Negative electrode lead, 4: Battery case, 5: Sealing plate, 6: Negative electrode terminal, 7: Gasket, 8: Sealing plug

## Claims

1. A positive electrode active material for a secondary battery, comprising:
a lithium metal composite oxide having a rock-salt type crystal structure attributable to space group Fm-3m,
wherein the lithium metal composite oxide contains at least Li and Mn,
a lattice constant a indicating a length of a crystal lattice of the lithium metal composite oxide in an a-axis direction is 4.050 Å or more and 4.165 Å or less, and
a specific surface area of the lithium metal composite oxide is 0.1 m²/g or more and 35 m²/g or less.

2. The positive electrode active material for a secondary battery according to claim 1,
wherein the specific surface area of the lithium metal composite oxide is 0.13 m²/g or more and 31.2 m²/g or less.

3. The positive electrode active material for a secondary battery according to claim 1,
wherein the specific surface area of the lithium metal composite oxide is 3.8 m²/g or more and 31.2 m²/g or less.

4. The positive electrode for a secondary battery according to claim 1,
wherein the lithium metal composite oxide further contains a positive element M different from Li and Mn, and
a ratio (b/c) of the number b of atoms of the Mn to the number c of atoms of the positive element M in the lithium metal composite oxide is 1 or more and 15 or less.

5. The positive electrode for a secondary battery according to claim 4,
wherein the positive element M includes at least one selected from the group consisting of Fe, Ge, Si, Ga, Ni, Co, Sn, Cu, Nb, Mo, Bi, V, Cr, Y, Ti, Zr, Zn, Na, K, Ca, Mg, Pt, Au, Ag, Ru, Ta, W, La, Ce, Pr, Gd, Sm, Eu, Yb, Dy, and Er.

6. The positive electrode for a secondary battery according to claim 4,
wherein the lithium metal composite oxide is represented by a compositional formula of LiₐMn_{b}M_{c}O_{d}Fₑ, and
1 ≤ a < 1.4, 0.5 ≤ b < 0.9, 0 < c ≤ 0.4, 1.33 ≤ d ≤ 2, 0 ≤ e ≤ 0.67, and 1.7 ≤ d + e ≤ 2.2 are satisfied.

7. A secondary battery comprising:
a positive electrode; a negative electrode; an electrolyte; and a separator provided between the positive electrode and the negative electrode,
wherein the positive electrode contains the positive electrode active material for a secondary battery according to any one of claims 1 to 6.
